(19) Europäisches Patentamt
European Patent Office
Office européen des brevets

(11) **EP 4 478 148 A1**

(12) **EUROPEAN PATENT APPLICATION**
published in accordance with Art. 153(4) EPC

(43) Date of publication:
**18.12.2024 Bulletin 2024/51**

(51) International Patent Classification (IPC):
***G06E 3/00*** (2006.01)     ***G06N 3/067*** (2006.01)
***G06N 3/08*** (2023.01)

(21) Application number: 22934598.8

(22) Date of filing: 06.07.2022

(52) Cooperative Patent Classification (CPC):
**G06E 3/00; G06N 3/067; G06N 3/08**

(86) International application number:
**PCT/CN2022/104229**

(87) International publication number:
**WO 2023/184776 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 01.04.2022 CN 202210349340

(71) Applicant: Huawei Technologies Co., Ltd.
Shenzhen, Guangdong 518129 (CN)

(72) Inventors:
• YANG, Jiamiao
Shanghai 200240 (CN)
• LI, Jingwei
Shenzhen, Guangdong 518129 (CN)
• SHAO, Rongjun
Shanghai 200240 (CN)
• DONG, Xiaowen
Shenzhen, Guangdong 518129 (CN)
• DING, Chunxu
Shanghai 200240 (CN)

(74) Representative: Goddar, Heinz J. et al
Boehmert & Boehmert
Anwaltspartnerschaft mbB
Pettenkoferstrasse 22
80336 München (DE)

(54) **OPTICAL COMPUTING DEVICE AND COMPUTING METHOD**

(57) This application discloses an optical computing device and a computing method, and pertains to the field of optical computing technologies. The optical computing device includes a control module, a light field modulation module, an optical computing module, and a light field detection module. The control module can convert input data into complex amplitude-light field mapping information that is information representing an amplitude and/or a phase. The light field modulation module can represent the input data based on an optical signal that is output based on the complex amplitude-light field mapping information obtained in the conversion procedure. A first computing result is generated based on the optical signal that represents the input data with high precision, to complete optical computing. This can improve an anti-interference capability and computing precision of the computing procedure, to obtain a more accurate computing result.

FIG. 1

## Description

### CROSS-REFERENCE TO RELATED APPLICATION

This application claims priority to Chinese Patent Application No. 202210349340.X, filed with the China National Intellectual Property Administration on April 1, 2022 and entitled "OPTICAL COMPUTING DEVICE AND COMPUTING METHOD", which is incorporated herein by reference in its entirety.

### TECHNICAL FIELD

This application relates to the field of optical computing technologies, and in particular, to an optical computing device and a computing method.

### BACKGROUND

With increasing requirements for intelligence in various industries, a neural network model with a learning capability is increasingly widely used in various fields. For example, a neural network model is used in fields such as image classification, target detection, and natural language processing. Generally, increasing a parameter scale of a neural network model helps the neural network model process a complex data set more accurately. However, as the parameter scale increases, a scale of matrix-vector multiplication increases sharply, resulting in a sharp rise in time and power consumption during training and inference of a neural network. Parameter scales of some existing large neural network models have reached a level of hundreds of billions, and training time of the models takes several weeks or even longer.
Because the matrix-vector multiplication is a basic computing operation in training and inference procedures of the neural network, the large-scale matrix-vector multiplication has become one of factors limiting a parameter scale and model performance of the neural network. For an electronic computing device based on the von Neumann architecture, a large-scale matrix-vector operation requires large memory space and consumes more power, resulting in slow computing.
To speed up the computing, physical and propagation properties of light can be used for the computing. However, current optical computing devices exhibit low computing precision and a low anti-interference capability.

### SUMMARY

This application provides an optical computing device and a computing method, to improve computing precision and an anti-interference capability.
According to a first aspect, an embodiment of this application provides an optical computing device, including a control module, a light field modulation module, an optical computing module, and a light field detection module.
The control module is configured to convert input first data into complex amplitude-light field mapping information, where the complex amplitude-light field mapping information is information representing an amplitude and/or a phase.
The light field modulation module is configured to output, based on the complex amplitude-light field mapping information of the first data, an optical signal representing the first data, where the optical signal is related to the information representing the amplitude and/or the phase.
The optical computing module is configured to: receive the optical signal that represents the first data and that is output by the light field modulation module, and propagate, via a medium, the optical signal representing the first data, to output an optical signal representing a first computing result.
The light field detection module is configured to: receive the optical signal that represents the first computing result and that is output by the optical computing module, and convert the optical signal representing the first computing result into an electrical signal, where the electrical signal represents the first computing result, and the first computing result is related to the first data.
In the optical computing device according to an embodiment of this application, the control module can convert the input data into the complex amplitude-light field mapping information that is the information representing the amplitude and/or the phase. The light field modulation module can represent the input data with high precision based on the optical signal that is output based on the complex amplitude-light field mapping information obtained in the conversion procedure. The first computing result is generated based on the optical signal that represents the input data with high precision, to complete optical computing. This can improve an anti-interference capability and computing precision of the computing procedure, to obtain a more accurate computing result.
In a possible implementation, the control module may be specifically configured to convert each element included in the input first data into complex amplitude information, where the complex amplitude information includes amplitude and/or phase information. The control module may determine light field mapping information of each element based on the complex amplitude information of each element, and combine light field mapping information of elements, to obtain the complex amplitude-light field mapping information of the first data.

In the implementation, the control module may convert each element in the input data into the complex amplitude information including the amplitude and/or phase information. The light field mapping information represents the complex amplitude information of each element, and the light field mapping information of the elements is combined, to obtain the complex amplitude-light field mapping information of the first data. The complex amplitude-light field mapping information can represent the first data with high precision, to help obtain a more accurate computing result.

In a possible implementation, the control module may be specifically configured to: after each element included in the first data is converted into the complex amplitude information, search a pre-established correspondence between light field mapping information and complex amplitude information for the light field mapping information corresponding to the complex amplitude information of each element, where the light field mapping information is used as the light field mapping information of each element.

In the implementation, the correspondence between light field mapping information and complex amplitude information is pre-established, so that the light field mapping information of each element included in the first data can be quickly determined. This helps speed up the computing.

In a possible implementation, the light field modulation module may include a light field modulator array, a collimated light source, and an optical filter. The light field modulator array is configured to load, under control of the control module, a light field modulation pattern based on the complex amplitude-light field mapping information of the first data, where the light field modulation pattern is related to the information representing the amplitude and/or the phase. Light emitted by the collimated light source reaches the light field modulator array and is modulated in the light field modulation pattern, and a modulated optical signal is output. The optical filter is configured to filter the modulated optical signal, to output diffracted light of a specified order, where the diffracted light of the specified order is the optical signal representing the first data.

In a possible implementation, the optical filter may include a first lens, a diaphragm, and a second lens, and the diaphragm is disposed on a back focal plane of the first lens and a front focal plane of the second lens. The first lens focuses the modulated optical signal on the plane on which the diaphragm is located, and the diaphragm filters the modulated optical signal, to obtain the diffracted light of the specified order. The diffracted light of the specified order is emitted through the second lens.

In this embodiment, the light field modulator array loads the light field modulation pattern based on the complex amplitude-light field mapping information of the input data and modulates the light emitted by the collimated light source. Then, the optical filter filters the modulated optical signal to obtain the diffracted light of the specified order, to obtain the optical signal that can represent the input data with high precision.

In a possible implementation, the optical computing module may include a glass substrate coated with zinc oxide particles, a glass substrate coated with titanium oxide particles, a scattering sheet, a multimode optical fiber, a diffracted light source element, a programmable spatial light modulator, or a programmable metasurface.

In a possible implementation, the light field detection module may include a one-dimensional photoelectric detector array, a two-dimensional photoelectric detector array, or a light field camera.

In a possible implementation, the control module may be further configured to: establish the correspondence between light field mapping information and complex amplitude information; determine candidate mapping information of each of a plurality of pieces of complex amplitude information in a procedure of establishing the correspondence between light field mapping information and complex amplitude information, where each piece of candidate mapping information is binarization information of K*K pixels, the binarization information indicates locations of a high-level pixel and a low-level pixel in the K*K pixels, and K is an integer greater than or equal to 2; and if there is one piece of first candidate mapping information of first complex amplitude information, use the first candidate mapping information as light field mapping information corresponding to the first complex amplitude information; or if there are a plurality of pieces of first candidate mapping information of first complex amplitude information, select, from the plurality of pieces of first candidate mapping information, first candidate mapping information including fewest or most high-level pixels, where the first candidate mapping information is used as light field mapping information corresponding to the first complex amplitude information, and the first complex amplitude information is any one of the plurality of pieces of complex amplitude information.

In this embodiment, different binarization information of K*K pixels is used as light field mapping information of different complex amplitude information, to represent the different complex amplitude information. This can improve representation precision of the complex amplitude information. The complex amplitude-light field mapping information of the input data is generated based on the light field mapping information corresponding to the complex amplitude information of the elements included in the input data, so that the input data can be represented with high precision.

In a possible implementation, the control module may be further configured to: receive the first computing result output by the light field detection module, generate third data based on input second data and the first computing result, and convert the third data into complex amplitude-light field mapping information, where the complex amplitude-light field mapping information of the third data is information representing an amplitude and/or a phase.

The light field modulation module is configured to output, based on the complex amplitude-light field mapping information of the third data, an optical signal representing the third data, where the optical signal of the third data is related to the information representing the amplitude and/or the phase.

The optical computing module is configured to: receive the optical signal that represents the third data and that is output by the light field modulation module, and propagate, via the medium, the optical signal representing the third data, to output an optical signal representing a second computing result.

The light field detection module is configured to: receive the optical signal that represents the second computing result and that is output by the optical computing module, and convert the optical signal representing the second computing result into an electrical signal representing the second computing result, where the second computing result is related to the third data.

The optical computing device provided in an embodiment of this application may perform cyclic computing based on a computing result at a previous moment, to implement a reservoir computing method, and may be used to implement a cyclic computing procedure in a neural network model, to speed up training and prediction procedures of the neural network model.

According to a second aspect, an embodiment of this application provides a computing method. The method may include:

A control module converts input first data into complex amplitude-light field mapping information, where the complex amplitude-light field mapping information is information representing an amplitude and/or a phase.

A light field modulation module obtains, based on the complex amplitude-light field mapping information of the first data, an optical signal representing the first data, where the optical signal of the first data is related to the information representing the amplitude and/or the phase.

An optical computing module propagates, via a medium, the optical signal representing the first data, to obtain an optical signal representing a first computing result.

A light field detection module converts the optical signal representing the first computing result into an electrical signal, where the electrical signal represents the first computing result, and the first computing result is related to the first data.

In a possible implementation, the input first data may be converted into the complex amplitude-light field mapping information in the following method:

The control module converts each element included in the input first data into complex amplitude information, determines light field mapping information of each element based on the complex amplitude information of each element, and combines light field mapping information of elements, to obtain the complex amplitude-light field mapping information of the first data. The complex amplitude information includes amplitude and/or phase information.

In a possible implementation, that light field mapping information of each element is determined based on the complex amplitude information of each element includes:

searching a pre-established correspondence between light field mapping information and complex amplitude information for the light field mapping information corresponding to the complex amplitude information of each element, where the light field mapping information is used as the light field mapping information of each element.

In a possible implementation, before the control module converts each element included in the input first data into the complex amplitude information, the method further may further include:

establishing the correspondence between light field mapping information and complex amplitude information in the following manners:

determining candidate mapping information of each of a plurality of pieces of complex amplitude information, where each piece of candidate mapping information is binarization information of K*K pixels, the binarization information indicates locations of a high-level pixel and a low-level pixel in the K*K pixels, and K is an integer greater than or equal to 2; and

if there is one piece of first candidate mapping information of first complex amplitude information, using the first candidate mapping information as light field mapping information corresponding to the first complex amplitude information, where the first complex amplitude information is any one of the plurality of pieces of complex amplitude information; or

if there are a plurality of pieces of first candidate mapping information of first complex amplitude information, selecting, from the plurality of pieces of first candidate mapping information, first candidate mapping information including fewest or most high-level pixels, where the first candidate mapping information is used as light field mapping information corresponding to the first complex amplitude information.

In a possible implementation, the method may further include:

The control module obtains the first computing result, generates third data based on input second data and the first computing result, and generates the third data into complex amplitude-light field mapping information.

The light field modulation module obtains, based on the complex amplitude-light field mapping information of the third data, an optical signal representing the third data.

A multiplication operation is performed on the optical signal representing the third data and a parameter matrix included in the optical computing module, to obtain an optical signal representing a second computing result.

The light field detection module converts the optical signal representing the second computing result into an electrical signal, to obtain the second computing result of multiplying the third data by the parameter matrix.

For technical effects that can be achieved in the second aspect, refer to the descriptions of technical effects that can be achieved in the first aspect. Details are not described herein again.

## BRIEF DESCRIPTION OF DRAWINGS

FIG. 1 is a diagram of a structure of an optical computing device according to an embodiment of this application;

FIG. 2 is a diagram of a structure of another optical computing device according to an embodiment of this application;

FIG. 3 is a diagram of a correspondence between light field mapping information and complex amplitude information according to an embodiment of this application;

FIG. 4 is a flowchart of a computing method according to an embodiment of this application;

FIG. 5 is a diagram of a correspondence between input data and light field mapping information according to an embodiment of this application;

FIG. 6 is a diagram of a structure of an optical filter according to an embodiment of this application;

FIG. 7 is a diagram of an intensity picture of an optical signal representing a computing result according to an embodiment of this application; and

FIG. 8 is a flowchart of another computing method according to an embodiment of this application.

## DESCRIPTION OF EMBODIMENTS

To make objectives, technical solutions, and advantages of embodiments of this application clearer, the following describes embodiments of this application in detail with reference to the accompanying drawings. Terms used in embodiments of this application are only used to explain specific embodiments of this application, and are not intended to limit this application. It is clear that the described embodiments are merely a part rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are explained and described, to facilitate understanding of a person skilled in the art. The terms in this application are not limited.

(1) A metasurface (metasurface) is an artificial laminated material with a thickness less than a wavelength. Metasurfaces may be categorized based on in-plane structural forms of the metasurfaces into two types: a metasurface with microstructures with lateral subwavelengths, and a metasurface with uniform film layers. The metasurface used in embodiments of this application is an optical metasurface. Properties such as polarization, phases, amplitudes, and frequencies of an optical signal may be modulated and controlled via the subwavelength microstructures, to implement functions such as polarization conversion, optical rotation, generation of vector beams, and writing specific information onto the optical signals.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally represents an "or" relationship between the associated objects.

Unless otherwise stated, ordinal numbers such as "first" and "second" in embodiments of this application are for distinguishing between a plurality of objects, but are not intended to limit an order, a time sequence, priorities, or importance of the plurality of objects.

A procedure of performing computing based on physical and propagation properties of light may be referred to as optical computing. To improve computing precision and an anti-interference capability of the optical computing, an embodiment of this application provides an optical computing device. The optical computing device may be configured to perform matrix-vector multiplication computing.

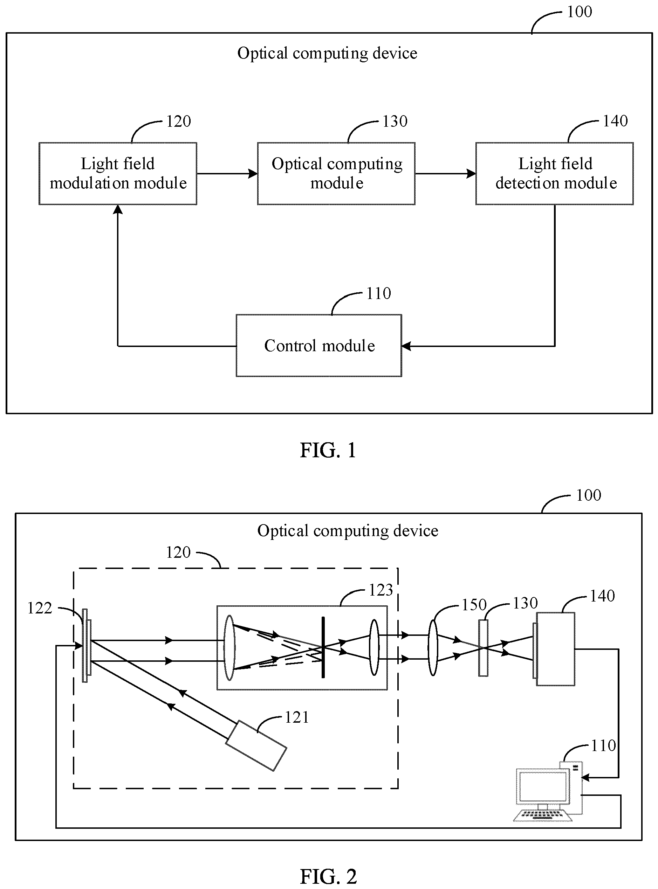

For example, FIG. 1 is a diagram of a structure of an optical computing device according to an embodiment of this application. As shown in FIG. 1, an optical computing device 100 provided in an embodiment of this application may include a control module 110, a light field modulation module 120, an optical computing module 130, and a light field detection module 140.

The control module 110 may convert input data into complex amplitude-light field mapping information. The complex amplitude-light field mapping information may be information representing an amplitude, the complex amplitude-light field mapping information may be information representing a phase, or the complex amplitude-light field mapping information may be information representing an amplitude and a phase. The light field modulation module 120 may output, based on the complex amplitude-light field mapping information, an optical signal representing the input data. The optical computing module 130 receives the optical signal that represents the input data and that is output by the light field modulation module 120, and propagates, via a medium, the optical signal representing the input data, to output an optical signal representing a computing result. The light field detection module 140 receives the optical signal that represents the computing result and that is output by the optical computing module 130, and converts the optical signal representing the computing result into an electrical signal, where the electrical signal represents a first computing result, and the first computing result is related to first data.

The control module can convert the input data into the complex amplitude-light field mapping information that is the information representing the amplitude and/or the phase. The light field modulation module can represent the input data with high precision based on the optical signal that is output based on the complex amplitude-light field mapping information obtained in the conversion procedure. The first computing result is generated based on the optical signal that represents the input data with high precision, to complete optical computing. This can improve an anti-interference capability and computing precision of the computing procedure, to obtain a more accurate computing result.

For example, after receiving the input data, the control module 110 may convert each element included in the input data into complex amplitude information, where the complex amplitude information includes amplitude and/or phase information. The control module 110 may determine light field mapping information of each element based on the complex amplitude information corresponding to each element, and combine light field mapping information of elements, to obtain the complex amplitude-light field mapping information of the input data.

The light field modulation module 120 may output, based on the complex amplitude-light field mapping information of the input data, an optical signal representing the input data.

The optical computing module 130 receives the optical signal that represents the input data and that is output by the light field modulation module 120, and performs a multiplication operation on the optical signal representing the input data and a parameter matrix included in the optical computing module 130, to output an optical signal representing a computing result.

The light field detection module 140 receives the optical signal that represents the computing result and that is output by the optical computing module 130, and converts the optical signal representing the computing result into an electrical signal, to obtain the computing result of multiplying the input data by the parameter matrix.

In some embodiments, the control module 110 may include an input port, an output port, and a processor. The control module 110 may include a plurality of input ports. One input port may be connected to an input component that may be used for human-computer interaction, or a peripheral device. The input port is configured to receive external input data or input instructions. Another input port is configured to connect to an output port of the light field detection module 140, to receive the computing result output by the light field detection module 140. In this way, cyclic computing for a next moment is performed based on the received computing result.

The processor may be implemented by using a processor chip, for example, a field-programmable gate array (field-programmable gate array, FPGA), a central processing unit (central processing unit, CPU), a micro control unit (micro control unit, MCU), a graphics processing unit (graphics processing unit, GPU), or the like.

The processor may generate input data based on the external input instructions, and process the input data, or process the external input data. In a matrix-vector computing scenario, the input data is vector data, and includes a plurality of elements. The processor may convert each element included in the input data into the complex amplitude information in a complex number form, and search a pre-established correspondence between light field mapping information and complex amplitude information for the light field mapping information corresponding to the complex amplitude information that is converted from each element, where the light field mapping information is used as the light field mapping information of each element. After determining the light field mapping information of each element, the processor may combine light field mapping information of elements, to obtain the complex amplitude-light field mapping information of the input data.

The procedure of pre-establishing the correspondence between light field mapping information and complex amplitude information may include the following steps: Determine candidate mapping information of each of a plurality of pieces of complex amplitude information, where each piece of candidate mapping information is binarization information of K*K pixels, the binarization information indicates locations of a high-level pixel and a low-level pixel in the K*K pixels, and K is an integer greater than or equal to 2. First complex amplitude information is used as an example. If there is one piece of first candidate mapping information of the first complex amplitude information, use the first candidate mapping information as light field mapping information corresponding to the first complex amplitude information, or if there are a plurality of pieces of first candidate mapping information of the first complex amplitude information, select, from the plurality of pieces of first candidate mapping information, first candidate mapping information including fewest or most high-level pixels, where the first candidate mapping information is used as light field mapping information corresponding to the first complex amplitude information, and the first complex amplitude information may be any one of the plurality of pieces of complex amplitude information.

The output port of the control module 110 is connected to the light field modulation module 120, and transmits the complex amplitude-light field mapping information of the input data to the light field modulation module 120.

In some embodiments, the control module 110 may further include a memory. The memory may be configured to store the received external input data or input data generated based on the input instructions, the computing result received from the light field detection module 140, and other data or program instructions required in the computing procedure.

The light field modulation module 120 may include an input port, a collimated light source, a light field modulator array, and an optical filter. The input port of the light field modulation module 120 is connected to the output port of the control module 110, and receives the complex amplitude-light field mapping information of the input data transmitted by the control module 110.

The light field modulator array may load, under control of the control module 110, a light field modulation pattern based on the complex amplitude-light field mapping information of the input data, to modulate an input light field. The light field modulator array may be a high-speed light field modulator array, for example, a digital micromirror array (digital mirror device, DMD), a ferroelectric liquid crystal spatial light modulator, or the like.

The collimated light source is configured to provide an illumination light source for the light field modulator array. Light emitted by the collimated light source reaches the light field modulator array and is modulated in the light field modulation pattern, and a modulated optical signal is output to the optical filter. The collimated light source may be a coherent light source, a collimated laser, or a light emitting diode (light emitting diode, LED) light source.

The optical filter may filter the modulated optical signal, to output diffracted light of a specified order and filter out diffracted light of other diffraction orders, where the diffracted light of the specified order is the optical signal representing the input data.

The optical computing module 130 is a physical medium with a specific parameter matrix. The optical computing module 130 may be any one of a glass substrate coated with zinc oxide particles, a glass substrate coated with titanium oxide particles, a scattering sheet, a multimode optical fiber, a diffracted light source element, a programmable spatial light modulator, or a programmable metasurface. The optical computing module 130 receives the optical signal that represents the input data and that is output by the light field modulation module 120, and interacts with the optical signal, to implement a multiplication operation on the optical signal representing the input data and the parameter matrix included in the optical computing module 130, to output the optical signal representing the computing result.

The light field detection module 140 includes a photoelectric detector and an output port. The photoelectric detector is configured to convert the optical signal that represents the computing result and that is output by the optical computing module 130 into an electrical signal, to obtain the computing result of multiplying the input data by the parameter matrix. The output port of the light field detection module 140 transmits the obtained computing result to the control module 110, and the control module 110 further processes the computing result. The photoelectric detector may be a one-dimensional photoelectric detector array, a two-dimensional photoelectric detector array, or a light field camera.

For ease of understanding, a specific application example is used in the following to describe in detail an optical computing device and a computing method performed by the optical computing device provided in an embodiment of this application. As shown in FIG. 2, the control module 110 in this embodiment is implemented by using a computer. The light field modulation module 120 includes a collimated light source 121, a light field modulator array 122, and an optical filter 123. The collimated light source 121 is a collimated laser, and the light field modulator array 122 is a DMD. The optical computing module 130 is a scattering sheet. The photoelectric detector in the light field detection module 140 is an area-array complementary metal-oxide semiconductor (complementary metal-oxide semiconductor, CMOS) camera.

In an optical computing procedure, to represent each element in input vector data by using light field mapping information after the element is converted into complex amplitude information, a correspondence between light field mapping information and complex amplitude information may be pre-established. In other words, light field mapping information corresponding to each piece of complex amplitude information is pre-determined, and is stored in a table of the correspondence between light field mapping information and complex amplitude information.

In a procedure of establishing the correspondence between light field mapping information and complex amplitude information, because K*K pixels are used to represent one element in the DMD, each piece of complex amplitude information may be represented by using binarization information of K*K pixels.

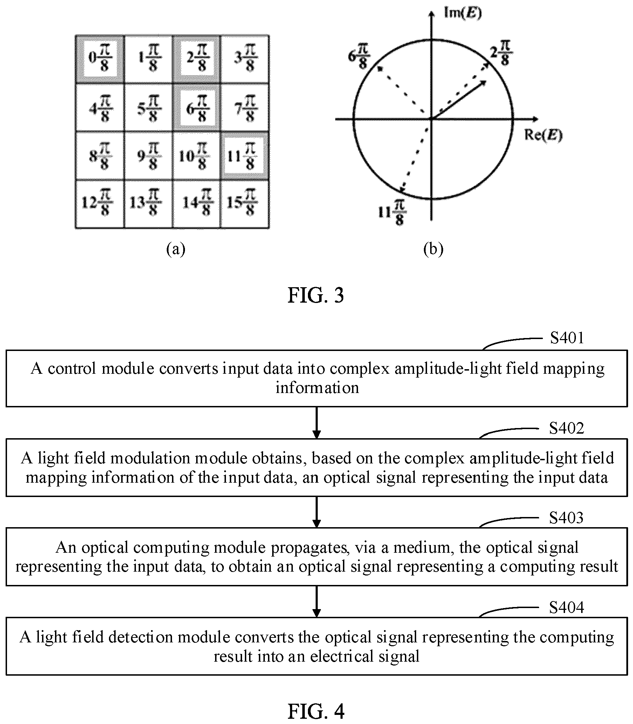

For example, binarization information of 4*4 pixels may be used to represent one piece of complex amplitude information. For example, as shown in FIG. 3, (a) in FIG. 3 is binarization information of 4*4 pixels. In the 4*4 pixels, a gray background indicates that a pixel is turned on in a DMD, and a white background indicates that a pixel is turned off in the DMD. In FIG. 3, (a) marks vectors in different directions, that is, phases, corresponding to pixels at locations in the 4*4 pixels in the complex amplitude information. (b) in FIG. 3 represents complex amplitude information formed by pixels turned on in the DMD in (a) in FIG. 3. In some embodiments, amplitudes of all pieces of complex amplitude information may be the same, for example, in a unit amplitude. In other words, different complex amplitude information is represented only by different phases. In other words, the complex amplitude information may include phase information. In some other embodiments, different complex amplitude information may alternatively be represented by using only different amplitudes. In other words, the complex amplitude information may include amplitude information. In some other embodiments, the complex amplitude information may include amplitude information and phase information. In other words, two different pieces of complex amplitude information may have different amplitudes and phases.

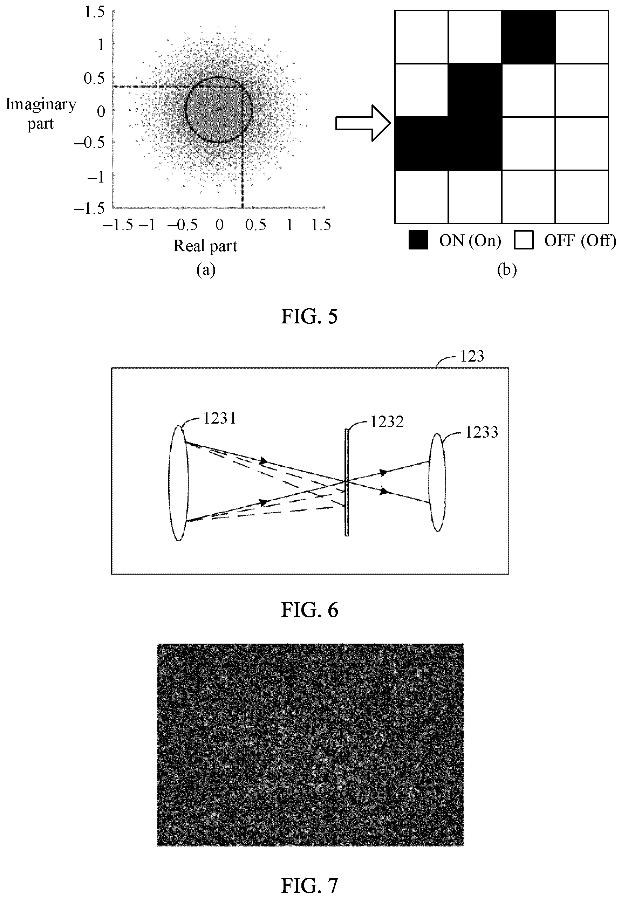

Complex amplitude information shown in (b) in FIG. 3 may alternatively be represented in a form shown in (a) in FIG. 5, that is, represented in a complex number form including a real part and an imaginary part. It is assumed that a high-level pixel represents a pixel that is turned on, and a low-level pixel represents a pixel that is turned off. A gray background represents a high-level pixel, and a white background represents a low-level pixel. Binarization information in (a) in FIG. 3 indicates locations of high-level pixels and low-level pixels in 4*4 pixels. The binarization information of 4*4 pixels in (a) in FIG. 3 may be used as light field mapping information of complex amplitude information shown in (b) in FIG. 3.

The control module 110 may determine, based on the foregoing correspondence, candidate mapping information corresponding to each piece of complex amplitude information, where any piece of complex amplitude information, referred to as first complex amplitude information, is used as an example, and if there is one piece of candidate mapping information of the first complex amplitude information, use the candidate mapping information as light field mapping information corresponding to the first complex amplitude information, or if there are a plurality of pieces of candidate mapping information of the first complex amplitude information, select, from the plurality of pieces of first candidate mapping information, candidate mapping information including fewest or most high-level pixels, where the candidate mapping information is used as light field mapping information corresponding to the first complex amplitude information. After the light field mapping information corresponding to each piece of complex amplitude information is determined, a correspondence between light field mapping information and complex amplitude information may be stored in a table. In this way, in an optical computing procedure, the light field mapping information corresponding to the complex amplitude information obtained by converting each element of the input data may be determined through table lookup.

As shown in FIG. 4, a procedure in which the optical computing device 100 processes input data may include the following steps.

S401: A control module converts input data into complex amplitude-light field mapping information.

The complex amplitude-light field mapping information is information representing an amplitude and/or a phase.

For example, the control module may convert each element included in the input data into complex amplitude information, determine light field mapping information of each element based on the complex amplitude information corresponding to each element, and combine light field mapping information of elements, to obtain the complex amplitude-light field mapping information of the input data.

In an embodiment, it is assumed that input data at a moment t is i(t), and a dimension of the input data is N. In other words, i(t) includes N elements, and the N elements in i(t) may be represented as $i_{t1}$, $i_{t2}$, ..., and $i_{tN}$. The control module 110 receives the input data i(t), and first normalizes each element $i_{ti}$ included in i(t) according to Formula (1), to obtain $k_{ti}$, where i is an integer from 1 to N in sequence. Data k(t) includes $k_{t1}$, $k_{t2}$, ..., and $k_{tN}$.

$$\mathrm{k}_{ti} = \frac{i_{ti} - \min(i(t))}{\max(i(t)) - \min(i(t))} \ \text{Formula (1)}$$

min(i(t)) indicates a minimum value in $i_{t1}$, $i_{t2}$, ..., and $i_{tN}$, and max(i(t)) indicates a maximum value in $i_{t1}$, $i_{t2}$, ..., and $i_{tN}$.

The control module 110 may convert the elements $k_{t1}$, $k_{t2}$, ..., and $k_{tN}$ in k(t) into complex amplitude information according to Formula (2), to obtain the complex amplitude information corresponding to each element $i_{ti}$ included in the input data i(t).

$$\mathrm{g(x)} = 0.5 \exp\left(\frac{\pi}{2}\mathrm{j} \cdot \mathrm{x}\right) = 0.5 \cos\left(\frac{\pi}{2}\mathrm{j} \cdot \mathrm{x}\right) + 0.5 \cos\left(\frac{\pi}{2}\mathrm{j} \cdot \mathrm{x}\right) \cdot j \ \text{Formula (2)}$$

x indicates the element $k_{ti}$, and g(x) indicates corresponding complex amplitude information.

For the obtained complex amplitude information corresponding to any element $i_{ti}$, the control module 110 may search the table of the correspondence between light field mapping information and complex amplitude information for target complex amplitude information that is the same as or similar to the complex amplitude information corresponding to the element iti, and use light field mapping information corresponding to the target complex amplitude information as light field mapping information of the element in. For example, as shown in FIG. 5, (a) in FIG. 5 indicates the complex amplitude information corresponding to the element iti, and (b) in FIG. 5 indicates the light field mapping information of the element in obtained through table lookup.

The control module 110 combines light field mapping information of the elements in the input data i(t), to obtain the complex amplitude-light field mapping information of the input data i(t). The complex amplitude-light field mapping information of the input data i(t) may be understood as binarization information for loading a DMD pattern under control.

S402: A light field modulation module obtains, based on the complex amplitude-light field mapping information of the input data, an optical signal representing the input data.

The optical signal of the input data is related to the information representing the amplitude and/or the phase.

The control module 110 inputs the complex amplitude-light field mapping information of the input data i(t) to the light field modulator array 122 in the light field modulation module 120, and controls the light field modulator array to load a light field modulation pattern based on the complex amplitude-light field mapping information of the input data i(t). Light emitted by the collimated light source 121 is incident on the light field modulator array 122 and is modulated in the light field modulation pattern loaded by the light field modulator array 122, and a modulated optical signal is output to the optical filter 123. The optical filter 123 filters the modulated optical signal to obtain diffracted light of a specified order, and performs low-pass filtering on the diffracted light of the specified order. The diffracted light of the specified order is the optical signal representing the input data i(t).

As shown in FIG. 6, the optical filter 123 may include a first lens 1231, a diaphragm 1232, and a second lens 1233. The first lens 1231 and the second lens 1233 form a 4f lens group, and the diaphragm 1232 is disposed on a back focal plane of the first lens 1231 and a front focal plane of the second lens 1233. The first lens 1231 may also be referred to as an objective lens. The first lens 1231 focuses a modulated optical signal on the plane on which the diaphragm 1232 is located. A hole is disposed on the diaphragm 1232, and the diaphragm 1232 is moved, to allow the diffracted light of the specified order to pass through the hole. Because the diffracted light of the specified order carries the light field information representing the input data i(t), only the diffracted light of the specified order is allowed to pass through the diaphragm 1232, diffracted light of other diffraction orders cannot pass through the diaphragm 1232. In some embodiments, the diffracted light of the specified order may include only diffracted light of one diffraction order. For example, the diffracted light of the specified order is diffracted light of a first order, or the diffracted light of the specified order is diffracted light of a negative first order. In some other embodiments, the diffracted light of the specified order may include diffracted light of a plurality of diffraction orders. For example, the diffracted light of the specified order may include diffracted light of a first order and diffracted light of a second order, or the diffracted light of the specified order may include diffracted light of a negative first order and diffracted light of a negative second order. The diffracted light of the specified order passes through the diaphragm 1232, and is scattered and projected onto the second lens 1233. The second lens 1233 converts the scattered diffracted light into parallel light and emits the parallel light.

The first lens 1231 and the second lens 1233 are disposed off-axis. To be specific, a principal optical axis of the first lens 1231 and a principal optical axis of the second lens 1233 are not a same straight line, but are two parallel straight lines with a very small distance therebetween. For example, the principal optical axis of the first lens 1231 may be located above the principal optical axis of the second lens 1233, or the principal optical axis of the first lens 1231 may be located below the principal optical axis of the second lens 1233. The first lens and the second lens are disposed off-axis, to ensure that the modulated optical signal output by the light field modulator array 122 of the light field modulation module 120 has a specific pre-phase factor on the back focal plane of the second lens. In this way, it is ensured that the diffracted light emitted through the second lens 1233 can accurately represent the input data.

S403: An optical computing module propagates, via a medium, the optical signal representing the input data, to obtain an optical signal representing a computing result.

For example, a multiplication operation is performed on the optical signal representing the input data and a parameter matrix included in the optical computing module, and the optical signal representing the computing result may be obtained.

A focusing lens 150 may be disposed between the light field modulation module 120 and the optical computing module 130. The focusing lens 150 focuses the diffracted light of the specified order output by the light field modulation module 120 to the optical computing module 130 including a parameter matrix. The optical computing module 130 is a scattering sheet with a complex Gaussian matrix as the parameter matrix. The diffracted light of the specified order interacts with the complex Gaussian matrix in the scattering sheet, to implement a multiplication operation on the optical signal representing the input data i(t) and the parameter matrix. An optical signal representing a computing result is output to the light field detection module 140.

S404: A light field detection module converts the optical signal representing the computing result into an electrical signal.

The electrical signal represents the computing result, and the computing result is related to the input data. For example, the computing result may be a computing result of multiplying the input data by the parameter matrix included in the optical computing module.

The light field detection module 140 detects, by using the CMOS camera, the optical signal representing the computing result, to obtain an intensity picture shown in FIG. 7. A matrix I (x, y) may be obtained from the intensity picture shown in FIG. 7. The matrix I (x, y) may be used as a computing result $Y = T*i(t)$ of multiplying the input data i(t) by the parameter matrix, where T is the complex Gaussian matrix, that is, the parameter matrix.

In some embodiments, the matrix I (x, y) may be further sorted into a form of I (1, x*y), to be used as a data compression result of the input data i(t). In this way, the input data i(t) is compressed in the foregoing procedure.

In an embodiment of this application, the control module and the light field modulation module represent the input data with high precision by using the light field. Then, the optical signal representing the input data passes through the scattering sheet with the complex Gaussian matrix as the parameter matrix, to obtain the computing result of multiplying the input data by the parameter matrix. The computing procedure is physical computing, and is fast, energy-efficient, and highly scalable.

In addition, the control module may convert each element in the input data into the complex amplitude information, obtain the light field mapping information of each element by representing the complex amplitude information corresponding to each element using the light field mapping information, and combine the light field mapping information of the elements, to obtain the complex amplitude-light field mapping information of the input data. The light field modulation module can represent the input data with high precision based on the optical signal that is output based on the complex amplitude-light field mapping information obtained in the conversion procedure. Compared with using an encoding method for rough representation of the input data, using the optical signal for high-precision representation of the input data implements the computing through interaction between the optical signal and the physical medium with the specific parameter matrix. The matrix-vector multiplication is implemented at a physical level. In addition, an anti-interference capability and computing precision of the computing procedure can be improved, to obtain a more accurate computing result.

In some other implementations, the optical computing device 100 provided in an embodiment of this application may be further configured to implement a reservoir computing algorithm. The reservoir computing algorithm may be used to implement a cyclic computing procedure in a neural network model. In the reservoir computing algorithm, both input data at a moment and intermediate data in a computing procedure need to be represented.

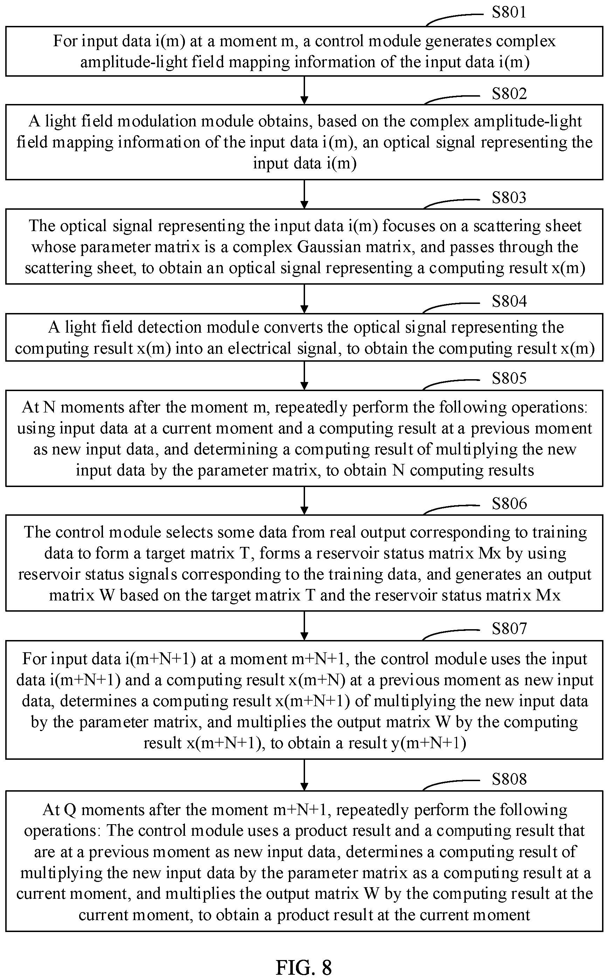

FIG. 8 is a flowchart of a computing method performed by the optical computing device 100 when a reservoir computing algorithm is implemented. As shown in FIG. 8, the method may include the following steps.

S801: For input data i(m) at a moment m, a control module generates complex amplitude-light field mapping information of the input data i(m).

The input data i(m) at the moment m may be training set data or to-be-predicted data of a neural network model. The input data i(m) is vector data. It is assumed that a dimension of the input data i(m) is P, and elements in i(m) are represented as $i_{m1}$ and $i_{m2}$, ..., and $i_{mP}$. Input data at all moments from the moment m to a moment m+N is [i(m), i(m+1), ..., and i(m+N)].

At the moment m, the control module 110 receives the input data i(m), and may generate the complex amplitude-light field mapping information of the input data i(m) in the method described in step S401.

S802: A light field modulation module obtains, based on the complex amplitude-light field mapping information of the input data i(m), an optical signal representing the input data i(m).

The control module 110 inputs the complex amplitude-light field mapping information of the input data i(m) to the light field modulator array in the light field modulation module 120, and controls the light field modulator array to load a light field modulation pattern based on the complex amplitude-light field mapping information of the input data i(m). Light emitted by a collimated light source is incident on the light field modulator array and is modulated in the light field modulation pattern loaded by the light field modulator array, and a modulated optical signal is output to an optical filter. The optical filter filters the modulated optical signal to obtain diffracted light of a first order, that is, the optical signal representing the input data i(m).

S803: The optical signal representing the input data i(m) focuses on a scattering sheet whose parameter matrix is a complex Gaussian matrix, and passes through the scattering sheet, to obtain an optical signal representing a computing result x(m).

The parameter matrix may be understood as a model parameter matrix of the neural network model.

S804: A light field detection module converts the optical signal representing the computing result x(m) into an electrical signal, to obtain the computing result x(m).

The light field detection module transmits the computing result x(m) to the control module, where the computing result x(m) may be considered as a reservoir status signal. The control module may perform computing again based on the computing result x(m) and input data at the next moment.

S805: At N moments after the moment m, repeatedly perform the following operations: using input data at a current moment and a computing result at a previous moment as new input data, and determining a computing result of multiplying the new input data by the parameter matrix, to obtain N computing results.

For example, at a next moment of the moment m, that is, the moment m+1, external input data i(m+1) and the computing result x(m) are used as new input data. The control module generates complex amplitude-light field mapping information of the new input data in the manner shown in step S401. A computing result of multiplying the new input data by the parameter matrix is obtained based on the complex amplitude-light field mapping information of the new input data as described in steps S802 to S804. In other words, the light field modulation module obtains an optical signal representing the new input data. A multiplication operation is performed on the optical signal representing the new input data and the parameter matrix in the scattering sheet, to obtain the optical signal representing the computing result. The light field detection module converts the optical signal representing the computing result into an electrical signal, to obtain the computing result of multiplying the new input data at the moment m+1 by the parameter matrix. The computing result is denoted as x(m+1). It is assumed that parameter matrices in the scattering sheet are complex Gaussian matrices w1 and w2. The computing result x(m+1) may be understood as a computing result of $f(w1 \cdot i(m+1)+w2 \cdot x(m))$, where $f()$ represents a nonlinear function. For example, $f()$ may represent a square of an electric field norm.

The foregoing procedure is repeatedly performed for the N moments after the moment m, to obtain N computing results x(m+1), x(m+2), ..., and x(m+N) in total respectively corresponding to i(m+1), i(m+2), ..., and i(m+N). N+1 computing results x(m), x(m+1), ..., and x(m+N) are obtained in total, plus the computing result x(m) corresponding to the input data i(m) at the moment m.

S806: The control module selects some data from real output corresponding to training data to form a target matrix T, forms a reservoir status matrix $M_x$ by using reservoir status signals corresponding to the training data, and generates an output matrix W based on the target matrix T and the reservoir status matrix $M_x$.

For example, the control module may select i(m+M+1), i(m+M+2), ..., i(m+N) to form the target matrix T, and correspondingly form the reservoir status matrix $M_x$ by using x(m+M+1), x(m+M+2), ..., and x(m+N), where M is an integer greater than or equal to 0. The output matrix W is obtained through computing according to a formula $W = (T \cdot M_x^T)(M_x \cdot M_x^T + \lambda \cdot I)^{-1}$, where I is an identity matrix, and $\lambda$ indicates a regularization coefficient.

S807: For input data i(m+N+1) at a moment m+N+1, the control module uses the input data i(m+N+1) and the computing result x(m+N) at a previous moment as new input data, determines a computing result x(m+N+1) of multiplying the new input data by the parameter matrix, and multiplies the output matrix W by the computing result x(m+N+1), to obtain a result y(m+N+1).

At the moment m+N+1, the external input data i(m+N+1) and the computing result x(m+N) are used as the new input data. The control module generates complex amplitude-light field mapping information of the new input data in the manner shown in step S401. A computing result of multiplying the new input data by the parameter matrix is obtained as described in steps S802 to S804. The computing result is denoted as x(m+N+1) corresponding to the moment (m+N+1). The control module multiplies the output matrix W by the computing result x(m+N+1), to obtain a product result y(m+N+1).

S808: At Q moments after the moment m+N+1, repeatedly perform the following operations: The control module uses a product result and a computing result that are at a previous moment as new input data, determines a computing result of multiplying the new input data by the parameter matrix as a computing result at a current moment, and multiplies the output matrix W by the computing result at the current moment, to obtain a product result at the current moment.

Q is a positive integer. For example, y(m+N+1) and x(m+N+1) are used as new input data. The control module generates complex amplitude-light field mapping information of the new input data in the manner shown in step S401. A computing result of multiplying the new input data by the parameter matrix is obtained as described in steps S802 to S804. The computing result is denoted as x(m+N+2) corresponding to a moment m+N+2. The control module multiplies the output matrix W by the computing result x(m+N+2), to obtain a product result y(m+N+2) corresponding to the moment m+N+2. The foregoing procedure is repeatedly performed, to obtain product results y(m+N+3), y(m+N+4), ..., and y(m+N+Q) in sequence.

In embodiments of this application, the computing is performed based on the propagation property of light. This is energy-efficient and low in memory usage, making it wellsuited for a computing scenario with large-scale of matrix-vector multiplications. In addition, embodiments of this application achieve high-precision representation of the input data, with advantages such as high computing precision and a good anti-interference capability.

The method steps in embodiments of this application may be implemented in a hardware manner, or may be implemented in a manner of executing computer programs or instructions by the processor.

In embodiments of this application, unless otherwise stated or there is a logical conflict, terms and/or descriptions between different embodiments are consistent and may be mutually referenced, and technical features in different embodiments may be combined based on an internal logical relationship thereof, to form a new embodiment. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

It is clear that a person skilled in the art can make various modifications and variations to this application without departing from the scope of this application. This application is intended to cover these modifications and variations provided that they fall within the scope of protection defined by the following claims and their equivalent technologies.

**Claims**

1. An optical computing device, comprising:

   a control module, configured to convert input first data into complex amplitude-light field mapping information, wherein the complex amplitude-light field mapping information is information representing an amplitude and/or a phase;
   a light field modulation module, configured to output, based on the complex amplitude-light field mapping information, an optical signal representing the first data, wherein the optical signal is related to the information representing the amplitude and/or the phase;
   an optical computing module, configured to: receive the optical signal that represents the first data and that is output by the light field modulation module, and propagate, via a medium, the optical signal representing the first data, to output an optical signal representing a first computing result; and
   a light field detection module, configured to: receive the optical signal that represents the first computing result and that is output by the optical computing module, and convert the optical signal representing the first computing result into an electrical signal, wherein the electrical signal represents the first computing result, and the first computing result is related to the first data.

2. The optical computing device according to claim 1, wherein the control module is specifically configured to:
   convert each element comprised in the input first data into complex amplitude information, determine light field mapping information of each element based on the complex amplitude information of each element, and combine light field mapping information of elements, to obtain the complex amplitude-light field mapping information of the first data, wherein the complex amplitude information comprises amplitude and/or phase information.

3. The optical computing device according to claim 2, wherein the control module is specifically configured to:
   after each element comprised in the first data is converted into the complex amplitude information, search a pre-established correspondence between light field mapping information and complex amplitude information for the light field mapping information corresponding to the complex amplitude information of each element, wherein the light field mapping information is used as the light field mapping information of each element.

4. The optical computing device according to any one of claims 1 to 3, wherein the light field modulation module comprises a light field modulator array, a collimated light source, and an optical filter;

   the light field modulator array is configured to load, under control of the control module, a light field modulation pattern based on the complex amplitude-light field mapping information, wherein the light field modulation pattern is related to the information representing the amplitude and/or the phase;
   light emitted by the collimated light source reaches the light field modulator array and is modulated in the light field modulation pattern, and a modulated optical signal is output; and
   the optical filter is configured to filter the modulated optical signal, to output diffracted light of a specified order, wherein the diffracted light of the specified order is the optical signal representing the first data.

5. The optical computing device according to claim 4, wherein the optical filter comprises a first lens, a diaphragm, and a second lens, the diaphragm is disposed on a back focal plane of the first lens and a front focal plane of the second lens, and a principal optical axis of the first lens is parallel to a principal optical axis of the second lens; and
   the first lens focuses the modulated optical signal on the plane on which the diaphragm is located, and the diaphragm filters the modulated optical signal, to obtain the diffracted light of the specified order, wherein the diffracted light of the specified order is emitted through the second lens.

6. The optical computing device according to any one of claims 1 to 5, wherein the optical computing module is specifically configured to: interact with, via a parameter matrix of the medium, the optical signal representing the first data, to output the optical signal representing the first computing result, wherein the first computing result is a product of the first data and the parameter matrix.

7. The optical computing device according to any one of claims 3 to 6, wherein the control module is further configured to: establish the correspondence between light field mapping information and complex amplitude information;

determine candidate mapping information of each of a plurality of pieces of complex amplitude information in a procedure of establishing the correspondence between light field mapping information and complex amplitude information, wherein each piece of candidate mapping information is binarization information of K*K pixels, the binarization information indicates locations of a high-level pixel and a low-level pixel in the K*K pixels, and K is an integer greater than or equal to 2; and
if there is one piece of first candidate mapping information of first complex amplitude information, use the first candidate mapping information as light field mapping information corresponding to the first complex amplitude information, wherein the first complex amplitude information is any one of the plurality of pieces of complex amplitude information; or
if there are a plurality of pieces of first candidate mapping information of first complex amplitude information, select, from the plurality of pieces of first candidate mapping information, first candidate mapping information comprising fewest or most high-level pixels, wherein the first candidate mapping information is used as light field mapping information corresponding to the first complex amplitude information.

8. The optical computing device according to any one of claims 1 to 7, wherein the control module is further configured to: receive the first computing result output by the light field detection module, generate third data based on input second data and the first computing result, and convert the third data into complex amplitude-light field mapping information, wherein the complex amplitude-light field mapping information of the third data is information representing an amplitude and/or a phase;

the light field modulation module is configured to output, based on the complex amplitude-light field mapping information of the third data, an optical signal representing the third data, wherein the optical signal of the third data is related to the information representing the amplitude and/or the phase;
the optical computing module is configured to: receive the optical signal that represents the third data and that is output by the light field modulation module, and propagate, via the medium, the optical signal representing the third data, to output an optical signal representing a second computing result; and
the light field detection module is configured to: receive the optical signal that represents the second computing result and that is output by the optical computing module, and convert the optical signal representing the second computing result into an electrical signal representing the second computing result, wherein the second computing result is related to the third data.

9. A computing method, comprising:

converting, by a control module, input first data into complex amplitude-light field mapping information, wherein the complex amplitude-light field mapping information is information representing an amplitude and/or a phase;
obtaining, by a light field modulation module based on the complex amplitude-light field mapping information, an optical signal representing the first data, wherein the optical signal is related to the information representing the amplitude and/or the phase;
propagating, by an optical computing module via a medium, the optical signal representing the first data, to obtain an optical signal representing a first computing result; and
converting, by a light field detection module, the optical signal representing the first computing result into an electrical signal, wherein the electrical signal represents the first computing result, and the first computing result is related to the first data.

10. The method according to claim 9, wherein the converting, by a control module, input first data into complex amplitude-light field mapping information comprises:
converting, by the control module, each element comprised in the input first data into complex amplitude information, determining light field mapping information of each element based on the complex amplitude information of each element, and combining light field mapping information of elements, to obtain the complex amplitude-light field mapping information of the first data, wherein the complex amplitude information comprises amplitude and/or phase information.

11. The method according to claim 10, wherein the determining light field mapping information of each element based on the complex amplitude information of each element comprises:
searching a pre-established correspondence between light field mapping information and complex amplitude information for the light field mapping information corresponding to the complex amplitude information of each element, wherein the light field mapping information is used as the light field mapping information of each element.

12. The method according to claim 11, wherein before the converting, by the control module, each element comprised in the input first data into complex amplitude information, the method further comprises:
establishing the correspondence between light field mapping information and complex amplitude information in the following manners:

determining candidate mapping information of each of a plurality of pieces of complex amplitude information, wherein each piece of candidate mapping information is binarization information of K*K pixels, the binarization information indicates locations of a high-level pixel and a low-level pixel in the K*K pixels, and K is an integer greater than or equal to 2; and
if there is one piece of first candidate mapping information of first complex amplitude information, using the first candidate mapping information as light field mapping information corresponding to the first complex amplitude information, wherein the first complex amplitude information is any one of the plurality of pieces of complex amplitude information; or
if there are a plurality of pieces of first candidate mapping information of first complex amplitude information, selecting, from the plurality of pieces of first candidate mapping information, first candidate mapping information comprising fewest or most high-level pixels, wherein the first candidate mapping information is used as light field mapping information corresponding to the first complex amplitude information.

13. The method according to any one of claims 9 to 12, wherein the method further comprises:

obtaining, by the control module, the first computing result, generating third data based on input second data and the first computing result, and generating the third data into complex amplitude-light field mapping information;
obtaining, by the light field modulation module based on the complex amplitude-light field mapping information of the third data, an optical signal representing the third data;
performing a multiplication operation on the optical signal representing the third data and a parameter matrix comprised in the optical computing module, to obtain an optical signal representing a second computing result; and
converting, by the light field detection module, the optical signal representing the second computing result into an electrical signal, to obtain the second computing result of multiplying the third data by the parameter matrix.

100

## Optical computing device

| | | |
|---|---|---|
| 120 | 130 | 140 |
| Light field modulation module | Optical computing module | Light field detection module |

110

Control module

FIG. 1

100

## Optical computing device

120

123

122

150 130 140

121

110

FIG. 2

(a)

(b)

FIG. 3

A control module converts input data into complex amplitude-light field mapping information — S401

A light field modulation module obtains, based on the complex amplitude-light field mapping information of the input data, an optical signal representing the input data — S402

An optical computing module propagates, via a medium, the optical signal representing the input data, to obtain an optical signal representing a computing result — S403

A light field detection module converts the optical signal representing the computing result into an electrical signal — S404

FIG. 4

FIG. 5

FIG. 6

FIG. 7

S801

For input data i(m) at a moment m, a control module generates complex amplitude-light field mapping information of the input data i(m)

S802

A light field modulation module obtains, based on the complex amplitude-light field mapping information of the input data i(m), an optical signal representing the input data i(m)

S803

The optical signal representing the input data i(m) focuses on a scattering sheet whose parameter matrix is a complex Gaussian matrix, and passes through the scattering sheet, to obtain an optical signal representing a computing result x(m)

S804

A light field detection module converts the optical signal representing the computing result x(m) into an electrical signal, to obtain the computing result x(m)

S805

At N moments after the moment m, repeatedly perform the following operations: using input data at a current moment and a computing result at a previous moment as new input data, and determining a computing result of multiplying the new input data by the parameter matrix, to obtain N computing results

S806

The control module selects some data from real output corresponding to training data to form a target matrix T, forms a reservoir status matrix Mx by using reservoir status signals corresponding to the training data, and generates an output matrix W based on the target matrix T and the reservoir status matrix Mx

S807

For input data i(m+N+1) at a moment m+N+1, the control module uses the input data i(m+N+1) and a computing result x(m+N) at a previous moment as new input data, determines a computing result x(m+N+1) of multiplying the new input data by the parameter matrix, and multiplies the output matrix W by the computing result x(m+N+1), to obtain a result y(m+N+1)

S808

At Q moments after the moment m+N+1, repeatedly perform the following operations: The control module uses a product result and a computing result that are at a previous moment as new input data, determines a computing result of multiplying the new input data by the parameter matrix as a computing result at a current moment, and multiplies the output matrix W by the computing result at the current moment, to obtain a product result at the current moment

FIG. 8

## INTERNATIONAL SEARCH REPORT

| International application No. |
|---|
| **PCT/CN2022/104229** |

**A. CLASSIFICATION OF SUBJECT MATTER**

G06E 3/00(2006.01)i; G06N 3/067(2006.01)i; G06N 3/08(2006.01)i

According to International Patent Classification (IPC) or to both national classification and IPC

**B. FIELDS SEARCHED**

Minimum documentation searched (classification system followed by classification symbols)

G06E; G06N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 光, optical, 计算, computing, DMD, SLM, 散射, scatter, 相位, phase, 幅度, amplitude

**C. DOCUMENTS CONSIDERED TO BE RELEVANT**

| Category* | Citation of document, with indication, where appropriate, of the relevant passages | Relevant to claim No. |
|---|---|---|
| X | DONG, Jonathan et al. "Optical Reservoir Computing Using Multiple Light Scattering for Chaotic Systems Prediction" *IEEE Journal of Selected Topics in Quantum Electronics,* Vol. 26, No. 1, 28 February 2020 (2020-02-28), sections II-VI, and figures 1 and 3 | 1-13 |
| X | DREMEAU, Angelique et al. "Reference-less measurement of the transmission matrix of a highly scattering material using a DMD and phase retrieval techniques" *OPTICS EXPRESS,* Vol. 23, No. 9, 04 May 2015 (2015-05-04), sections 2-5, and figure 2 | 1-13 |
| X | SAADE, A. et al. "Random projections through multiple optical scattering: approximating kernels at the speed of light" *2016 IEEE International Conference on Acoustics, Speech and Signal Processing (ICASSP),* 31 December 2016 (2016-12-31), sections 2-4, and figure 2 | 1-13 |
| A | ZHENG, Jingyi et al. "Optical Scatter Imaging with a digital micromirror device" *OPTICS EXPRESS,* Vol. 17, No. 22, 26 October 2009 (2009-10-26), entire document | 1-13 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2022/104229** |

### C. DOCUMENTS CONSIDERED TO BE RELEVANT

| Category* | Citation of document, with indication, where appropriate, of the relevant passages | Relevant to claim No. |
|---|---|---|
| A | CN 112965262 A (ZHU JIAWEI) 15 June 2021 (2021-06-15)<br>entire document | 1-13 |
| A | CN 110908428 A (SOUTHEAST UNIVERSITY) 24 March 2020 (2020-03-24)<br>entire document | 1-13 |
| A | WO 2015068834 A1 (NATIONAL UNIVERSITY CORPORATION HOKKAIDO UNIVERSITY) 14 May 2015 (2015-05-14)<br>entire document | 1-13 |

Form PCT/ISA/210 (second sheet) (January 2015)

**INTERNATIONAL SEARCH REPORT**
Information on patent family members

International application No.

**PCT/CN2022/104229**

| Patent document cited in search report | | | Publication date (day/month/year) | Patent family member(s) | | | Publication date (day/month/year) |
|---|---|---|---|---|---|---|---|
| CN | 112965262 | A | 15 June 2021 | None | | | |
| CN | 110908428 | A | 24 March 2020 | None | | | |
| WO | 2015068834 | A1 | 14 May 2015 | JP | WO2015068834 | A1 | 09 March 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210349340X